(19) **Europäisches Patentamt**

**European Patent Office**

**Office européen des brevets**

(11) **EP 1 312 662 A2**

(12) **EUROPEAN PATENT APPLICATION**

(43) Date of publication:
21.05.2003 Bulletin 2003/21

(51) Int Cl.[7]: **C10J 3/66**

(21) Application number: **01401176.1**

(22) Date of filing: **07.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Cirad-Foret**
**34387 Montpellier Cedex 5 (FR)**

(72) Inventors:
• **Girard, Philippe, Cirard-Foret**
**34387 Montpellier Cedex 5 (FR)**
• **Van de Steene, Laurent, Cirad-Foret**
**34387 Montpellier Cedex 5 (FR)**

• **Koch, Thomas**
**4621 Gadstrup (DK)**
• **Antonini, Gérard, UTC, Centre de Recherche**
**60205 Compiègne Cedex (FR)**
• **Bensakhria, Ammar, UTC, Ctre de Recherche**
**60205 Compiègne Cedex (FR)**

(74) Representative: **Richebourg, Michel François**
**Cabinet Michel Richebourg,**
**"Le Clos du Golf",**
**69, rue Saint-Simon**
**42000 Saint Etienne (FR)**

(54) **Biomass gasification process, and apparatus, and their applications**

(57) The invention relates to a new and efficient staged gasification process characterized by a close integration of the gas cleaning part.

The unit and process use a new device named Total Char Combustion and Tar Cracking Chamber (TCC)[2] positioned between a pyrolysis unit (PYR) and a char reduction reactor (CRC), in a stage divided gasifier. The char conversion takes place in 2 steps. In the first step, the char produced in the pyrolysis unit (PYR) is introduced in the (CRC) whose main purpose is to convert as much as possible carbon of the char. The (CRC) belongs to the fluidized bed type. The second step takes place in the (TCC)[2] whose purpose is to perform both a complete conversion of the remaining carbon still present after reaction in the (CRC); and the thermal cracking of the tar contained in the pyrolysis gases, the residual ashes being vitrified simultaneous and eliminated as a slag.

Low grade feedstock with low melting point ashes can be used: straw and bark.

A new vibrofluidized pyrolysis unit is implated to achieve an appropriate and constant quality of char with a minimum preparation of the biomass, and offers the opportunity to orientate the process for gas or solid.

The invention leads to the following advantages: higher tolerance toward different quality of feedstocks including low grade feedstocks; recovery of the residual carbon content in ashes; production of a clean gas (low residual tar, ashes and alkali) for a direct injection in an engine/turbine. These results will induce a higher efficiency of the process and consequently bring to maturity the gasification technology.

Figure 1 A

EP 1 312 662 A2

**Description**

Technical field of the invention :

The present invention relates to the treatment of a so-called « biomass » in order to recover energy, heat, electrical energy, from agriculture or industrial wastes.

As is well-known, a biomass is made of organic waste and residues of various human, agriculture or industrial activities, such as mainly wood and straw masses, and more recently emerging biomasess made of agriculture residues (mainly from the production of cereals) and municipal or industrial, organic, wastes or residues, or culture specifically designed and adapted to the production of the so calles « bio-energy ».

Prior art :

At the United Nations Rio Conference on the Environment, the European Union committed itself to stabilizing its CO2 emissions at 1990 levels by the year 2000. At the coming United Nations Climate Conference which will be held in Japan in late 1997, the European Union will commit itself to a 10% reduction in the emission of greenhouse gases based on 1990 levels.

To achieve the above goal, it is essential to develop clean and efficient renewable energy technologies.

The sector of decentralized heat and power production is a major field in the energy research and technological development activities for the European commission.

For the decentralized use of biomass fuels, the combination of electrical and thermal energy production is most promising from the economic point of view, but it needs clean and robust technologies with high overall efficiency and maximum electricity yield. The gasification based technologies are promising but major adaptation of the gas quality required in the subsequent conversion steps needs major development and innovation in order to obtain a high, appropriate conversion efficiency of the gas.

Despite progress for large scale applications, the technology for small scale application (below 5 MW) still needs major innovative developments, especially in the gas cleaning area.

Inter alia, a major and challenging goal is the development of a new process characterized by the minimization of the gas cleaning part.

Currently used or proposed processes are based on gasification.

Two main types of gasification reactors are known : with a fixed bed or with a fluidized bed.

Reference is made in that respect to the article by Beenackers and Maniatis (1996) in "Biomass gazification and pyrolysis : State of the art and future prospects", edited by M. Kaltschmitt and AV Bridgwater (1997), pages 24 ff., entitled « Gasification technologies for heat and power from biomass ». The said articles covers small scale fixed bed gasification and larger scale fluidized bed technology.

In both cases the gasification is performed in the presence of air, and the different steps of the process ( pyrolysis, combustion, gasification) are conducted in the same reactor.

In order to reduce the tar formation, it is also known to clean a gas by a dolomite catalyst (BTG, 1995) implemented in the gasifier.

Corella et al (1995) suggested to use a catalyst from other related applications, e.g. hydrocracking or steam reforming.

Results are promising, but losses of catalysts occur, probably due to the complex nature of the tars.

Gulyurtlu (1996) proposed to thermally decompose or crack the tar at a temperature of 1200 - 1300 °C. However, the heat loss is important and unacceptable.

Pyrolysis technologies have been proposed, to reduce the fuel cost preparation, and improve the tolerance of the considered technologies vs. the biomass quality and the cost of preparation of the fuel.

A survey of pyrolysis technologies for bio-char production shows that some pyrolysers , such as screw pyrolysers, may be of interest but are difficult to up-scale. Large equipments have been devoted to mainly wood residues ( Gaudemard and Ibrahimi, 1985 ; Heerah, 1989).

It is also knwon that tars can be substantially reduced by co-combustion. I a conventional staged divided pyrolyser, the biomass is fed into a pyrolysis unit generating char and pyrolysis gas. The char is then converted to gas, b y oxidyzing parts of the pyrolysis gas in a combustion chamber, and feeding the combusted gas into the char reduction (conversion) reactor, through the char. Char conversion rate can be increased by increasing the temperature, but experience shows that in many cases, namely when gasifying vegetal biomasses, increasing the temperature causes slagging from the ash generated in the char reduction zone. An attempt to increase the mass flow into the char reduction reactor results in a 2 to 4 times increase in thermal losses. Therefore, attempting to simultaneously reduce the char loss and the thermal loss leads to contradictory operating conditions.

EP 0 908 672 teaches a method for fusion treating a solid waste for gasification. The process comprises a pyrolysis gasification in a first gasification furnace (600 °C and 725 °C), then a high-temperature combustion in a melting furnace (above the fusion temperature).

WO 00/06671 teaches the treating of biomasses by a first pyrolysis step then a gasifier.

EP 0 921 182 also teaches the treating of biomass by pyrolysis then a gasification / fusing step.

Summary of the Technical problems :

- important amounts of tars are present in the produced gases, due to the low temperatures which are required to avoid the melting of the ashes in the reactor. The post-treatment of the gases is obviously very expensive.

- high nitrogen concentration int he produced gases (45 - 55 %), what translates into a low heating energy of the produced gases ( 4 - 6 MJ/Nm3).

- poor energy yield, due to a high percentage of solid, non-burned residues in the ashes.

- in fixed beds technologies, the maximum obtainable electric energy is so far widely below 1 MWelect.

- in fluidized beds technologies, and fixed beds with gas overflow , the moisture in the starting biomass must be below 20 %.

In order to produce a « clean » gas, it is necessary to eliminate the tars present in the gases. Priot art technologies are, though expensive, of little efficiency in that respect.

It is also requested to improve the energetic yield through a total conversion of the solid carbon content. However, a difficulty arises from the relatively low melting point of the ashes, which demand that the temperatures be lower than 1200 - 1300 °C.

Additionally, it is necessary to produce a gas of more value than that of the gas produced by the prior techniques of gasification in the presence of air.

As can be seen from the above, not only considerable room remains for significant improvements, for which exist a considerable demand, but additionally it is known that the said improvements call for often contradictory technical solutions.

It is the merit of the present invention to propose a technical solution which overcome most, if not all, of the drawbacks of the prior art, solves and / or avoids the contradictions as stated above, and produce a clean gas of high energy value.

Abstract of the invention :

The present invention relates to a process for gasifying a biomass, of the type comprising a step of pyrolysing the said biomass, and a step of char reduction, characterized in that the char reduction or conversion takes place in two distinct steps.

Three quite original features are thus achieved, which are a characterizing part of the present invention : the process and unit produces a clean gas, i.e. with a very low tar content, of high energy value, the biomass carbon content is totally converted, this ensuring an optimal energetic yield, and the ashes produced in the process are ultimately vitrified.

According to a preferred embodiment, the char reduction or conversion comprises, or takes place in, two steps comprising a gasification step and a total char combustion step.

According to a preferred embodiment of the invention, the total char combustion step incorporates a tar cracking step and is performed between (when following the gas line) the pyrolysis step and the char gasification step.

According to still a preferred embodiment of the invention, the total char combustion step, which incorporates a tar cracking step, is performed into the form of a single, combined, total char combustion and tar cracking step.

With the above design, the char conversion takes place in two steps :

The first step is the char reduction reactor (CRC) whose main purpose is to convert as much as possible carbon of the char supplied directly from the pyrolysis unit into gas by means of reduction reactions.

The second step takes place in the TCC2 reactor whose purpose, with respect to the char, is to perform a complete conversion of the remaining carbon from the CRC drain off; also in TCC2 reactor are the pyrolysis gases thermally cracked and residual ashes are vitrified and eliminated as slag

According to a further, non limitative improvement, the biomass pyrolysis step is performed under vibrating conditions as described below.

This is an original part of the invention too.

Such a vibrating pyrolyser allows :

- to produce a char with an homogeneous quality, which is additionally independant from the nature of the raw biomasse, this by paying on the operating conditions such as residence time, temperature, and so on ;

- to simplify the preparation of the product prior to its introduction into the gasifier (drying, grinding or milling) ;

- to sort out the pyrolysis gases in order to control their injection into the process and to optimize their energetical valorization (thermal cracking and / or combustion)

As will be seen herebelow, in a preferred and non limitative embodiment, the fluidized bed gazifier is combined with two reactors, i.e. a pyrolyser and a high temperature combustion chamber (called TCC2). The char « to gasify » is produced by the pyrolyser, while the energy required for the gasification is generated by the TCC2 due to the combustion of the ashes (resulting from the gasification step) and of a fraction of the pyrolysis gases.

The invention encompasses :

- the process(es) and the corresponding plant(s)

- the TCC2 reactor or chamber

- the vibrating pyrolysis unit

- the valuable products, intermediate products or by-products obtained by the performing of the above process(ses) and or the working of the above plant (s), or TCC2 reactor, or vibrating pyrolysis unit, or of any biomass gasification plant comprising such a TCC2 chamber (or equivalent distinct chambers for performing the steps to be preferably performed in TCC2) and / or a vibrating pyrolysis unit;

- the applications and uses of the above processes, plants, reactors, units, and products, intermediate products, and by products, in domains such as:

    - production of electricity, of heat, of any energy arising from the conversion or use of the said heat,

    - cogeneration from by-products, residues, wastes, etc... of agriculture or industrial or municipal origin, more generally from any carbonaceous product, waste, resideu, etc....

    - valorisation of novel and renewable energies, inter alia in order to reduce the production of greenhouse gas according to the Kyoto Protocole,

etc....

The invention also encompasses the connecting devices and process lines between the Char Reduction Chamber (CRC) and the TCC2 as described below, and between the Pyrolyser and the CRC, as described below.

**Detailed description of the invention :**

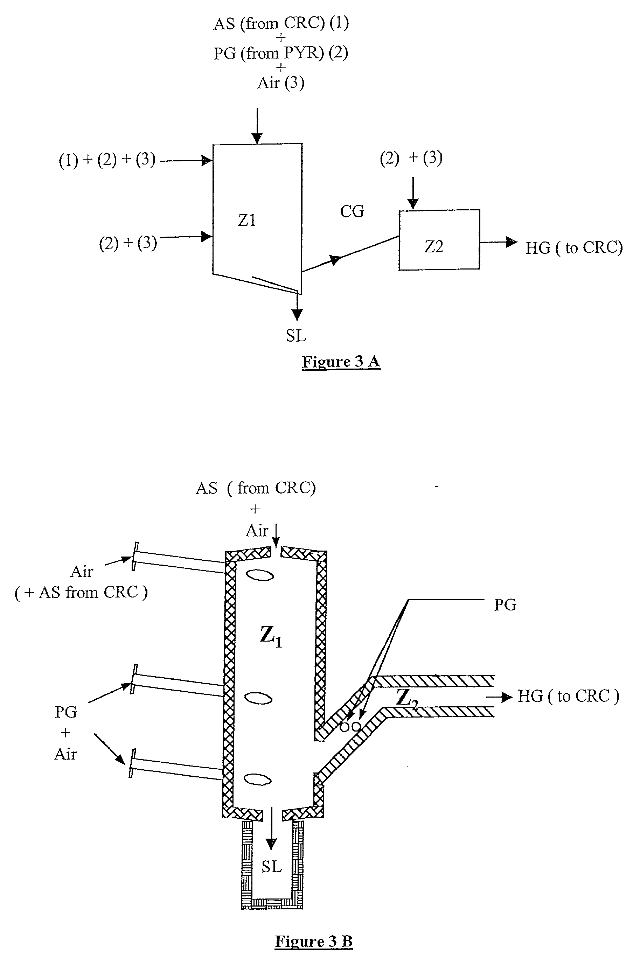

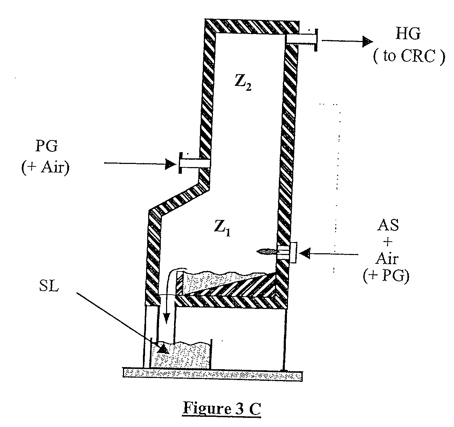

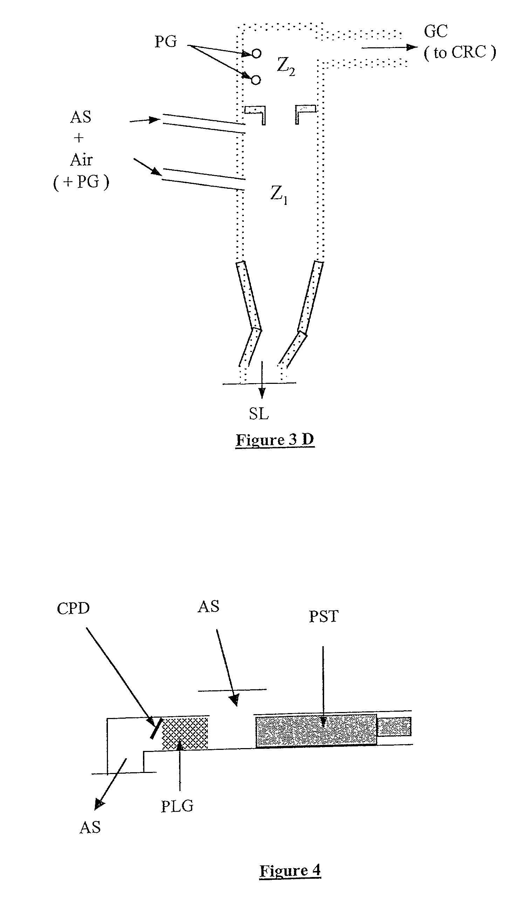

In the best mode of the invention, the high temperature combustion reactor or chamber for performing the TCC2 step is preferably made of, or comprises, two zones (see figure 3):

- a first zone Z1 for the combustion and melting of the ashes resulting from the gasification step

- a second zone Z2 for the cracking and / or combustion of the pyrolysis gases.

In Z1, the combustion of the gasification ashes is performed under stoechiometric conditions, so as to convert the total amount of carbon into a gas. That carbon comes from the gasifier. The said zone Z1

The said zone Z1 is maintained at an elevated temperature (> 1300 °C or so) due to the heat of the flame and its radiating towards the reactor or chamber walls, which temperature is high enough to allow the melting of the ashes. It is therefore easy to take the ashes under a liquid state out of the reactor or chamber.

In Z2, where the chemical atmosphere is a reducing atmosphere, is performed the thermal cracking of the pyrolysis heavy gases and in particular of the tars.

In the event, the energy provided by the combustion of the carbon in Z1 is insufficient, then the amount of air can be increased so as to allow a partial oxidation of the pyrolysis gases.

To be noted, the above process proved hard to design, and even to think of, since several prejudices accumulated: namely, it was not at all certain to reach a complete combustion of the carbon, nor to reach a temperature high enough to melt the ashes, there was a likelood of agglomeration / sticking of particles in the fluidized bed of the CRC reactor, and the tar cracking is not an easy step.

The above difficulties have been overcome, and the invention leads to numerous and major improvements.

It allows to optimize the operating conditions of the installation, depending on the nature and the composition of the raw biomass (ash content, moisture, volatile content, etc....).

The invention also allows to produce a « clean » gas (i.e. with a very low tar content).

The carbon is totally converted (this ensuring an optimal energetic yield).

The taking out of the ashes is simplified due to the very simple flowing b y mere gravity under the form of a glassy product.

Last but not least, the ashes are rendered inert.

**BRIEF DESCRIPTION OF THE DRAWINGS**

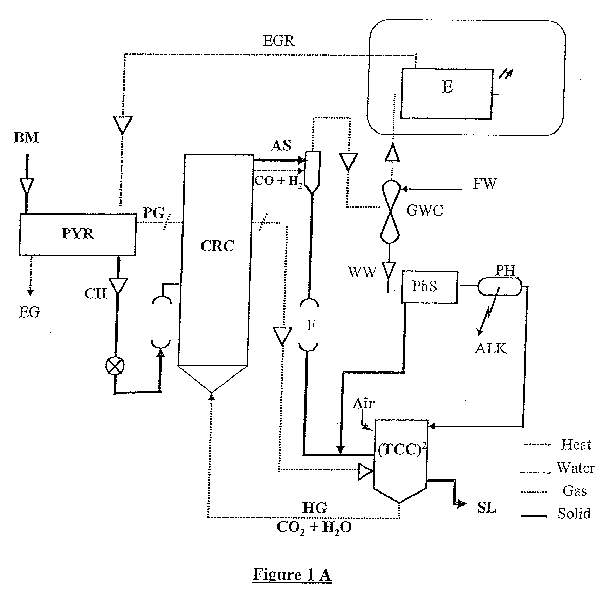

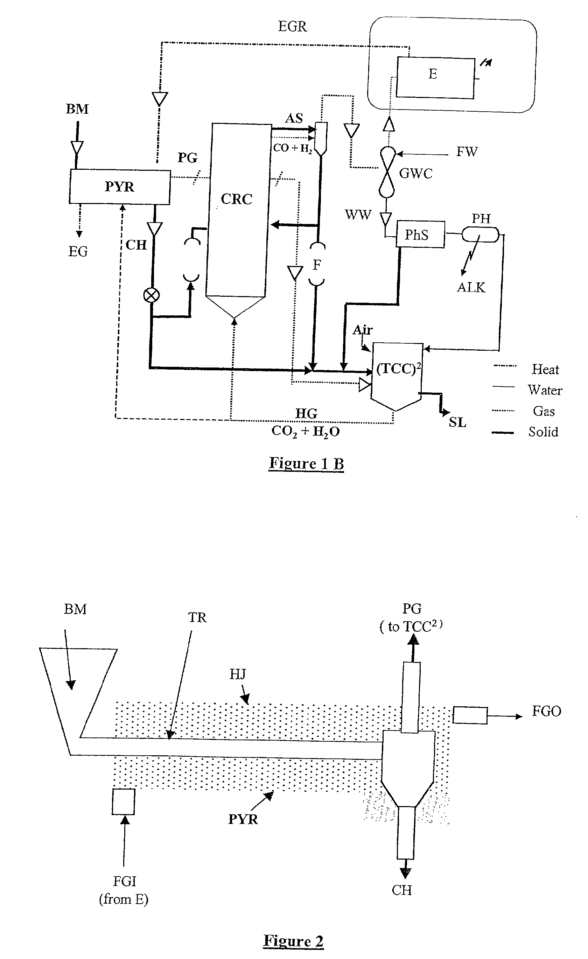

    **Figure 1** is a simplified diagram of a non limitative gasification plant of the invention, adapted to agri biomass ;

    Figure 1 is composed of Fig 1 A and 1 B.

Figure 1 A shows the actual or « best mode » design of the proposed process.

As to figure 1 B, it shows three various options for process functioning :
By-pass of a part of char directly from pyrolysis unit to TCC². It could allow a better control of the unit: in particular if we need more energy from the TCC² ; for exemple in the case where gazification is very efficient and so only inert ashes (without carbon) would flow out of the CRC to the TCC[2].

Re-circulation of a part of ashes (char) from the CRC in the view of the objective to improve gazification stage. By-pass of a part TCC[2] gases in the Pyrolyser. Then, energy from this hot gases could be used for pyrolysis reaction. It also could be interesting to start char gazification in the pyrolyser, for exemple to improve specific area of char or biomass degradation.

Comments :

In the case of the use of a washer, water is recovered and injected in the TCC[2]. This water (steam) will allow to improve gazification of char in the CRC. Fine particles not collected by the cyclone will be then re-injected in the TCC[2] with water from washer.

In the pilot unit, we will not use a washer, but a heat exchanger + a bag filter. This solution is certainly less interesting for an industrial point of view but more simple flexible and in a pilot unit.

**Figure 2** is a schematic view of a non limitative pyrolysis unit.

**Figure 3** is a schematic view of a non limitative embodiment of the TCC2 reactor or chamber of the invention.

Figure 3 is composed of Figures 3A to 3D, each of the figures showing different versions of the unit.

Figure 3 A is a schematic diagram showing the principle of the TCC2, and on which is shown an essential concept which consists in separating the cobustion zone Z1 aprat from the the cracking zone Z2. This point appears to be important since the combustion of the ashes (char) is much slower than the combustion of the pyrolysis gases (and of tars). As a matter of consequence, if the gases and the ashes are fed together, oxygen will be used preferentially by the pyrolysis gases, what will impair the combustion of the ashes from gasification. It would of course be possible to add more air; it is however important to minimize the amount of air (since the nitrogen contained in air will become part of the exhaust gases and will lower their heating capacity or caloric power). Stated another way, the zone Z1 is the zone devoted to the combustion, where ashes from combustion are burnt as well as a part of the gases from pyrolysis (« pyrolysis gases ») depending on the required energy ; this zone features a high temperature so as to allow the melting of the ashes. The remaining part of the pyrolysis gases in injected or fed into zone Z2 (where there is no oxygen left) so as to allow the thermal cracking. The point of interest is clearly to inject a minimum amount of pyrolysis gases into the combustion zone Z1, so as to limit or reduce the amount of required air.

In addition, it can be seen on Figure 3 A a possibility of staging of the combustion air and of the pyrolysis gases in the combustion zone Z1. Staging of air allows to improve the combustion. Staging of the pyrolysis gases allows to bring more energy in specific zones such as the melting zone or that of ignition of the solid particles (near or in the vicinity of the burner).

The ashes from gasification can also be fed via a burner or not, either in the axis of the reactor, or tangentially. A tangential feeding allows to increase the retention time of the ashes and to improve the recovery of the slag by « cycloning » (whirling effect). A feeding along the axis of the reactor allows to use burners of a classical type for pulverulent fuels - « swirl burners » - in which the mixing of the air / solids is important and therefore improve the combustion.

Figure 3 B is a schematic view showing the principle of the « best mode » as of today for the technological solution, which is in line with the main concepts listed on Figure 3A. Namely, the zone Z2 is inclined upwards so as to allow a better recovery of the slags and to avoid the exhaust of ashes .

Figures 3 C and 3 D show less preferred versions of the TCC2 design.

Figure 3 C namely represents a version in which the two zones Z1 and Z2 are not made distinct. The interest of that desing resides in the fact that the heat is more confined (less heat losses). The cracking zone Z2 is maintained at a very high temperature thanks to the close relationship with the combustion zone Z1.

Figure 3 D namely represents a version in which the combustion is performed in a cyclone containing the zone Z1 ; the hot gases therefore flow upwards along the axis of the device and bring the necessary energy to the cracking zone Z2 for the pyrolysis gases.

**Figure 4** shows a connecting device according to the invention, as a preferred mode, but not limitatively, between the Char Reduction Chamber CRC and the TCC2.

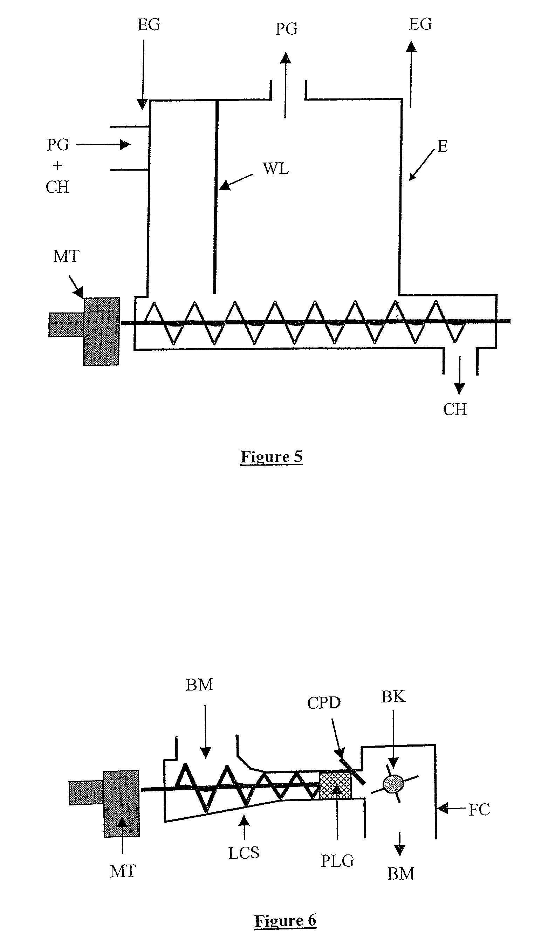

**Figure 5** shows a connecting device, according to the invention, as a preferred mode, but not limitatively, between the pyrolyser and the CRC.

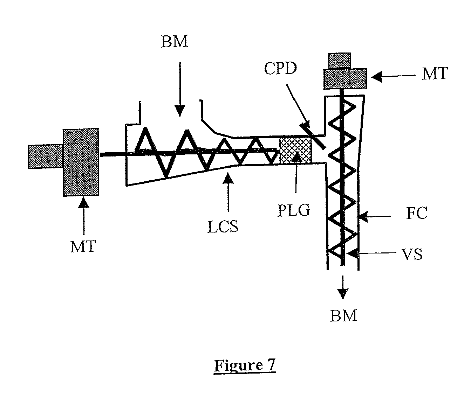

**Figure 6** and **Figure 7** show a device or system for feeding the biomass into the pyrolyser.

## DETAILED DESCRIPTION OF THE PREFERRED EMBODIMENTS

**TCC2:**

The main aim of the Total Char Combustion and Tar Cracking Chamber (TCC)[2] is to recycle the remaining part (15 to 20%) of the carbon included in the ashes coming from the Char Reduction Reactor CRC as well as the tar flowing with pyrolysis gases in order to obtain a complete conversion of the original carbon content in the biomass.

The (TCC)[2] will be operated at temperature in the range 1200 - 1500 °C. In these conditions, the combustion of the carbon with the pyrolysis gases will lead to a liquid fraction containing essentially mineral matters eliminated as slag after vitrifation.

(TCC)[2] is a key component of the goal gasification unit allowing:

1. a carbon conversion estimated at about 98% of the initial carbon content of the biomass.
2. a drastically decrease in the tar content of the gases at a level estimated in the range 10-50 mg/$Nm^3$.
3. An elimination of the serious technological constraints related to the fusibility of the mineral matters included in the biomass.

Four versions of the TCC2 are shown of **Figures 3A to 3D**.

**Vibro-fluidized pyrolysis unit:**

The pyrolysis unit is preferably based on a tubular sub - stoechiometric reactor, heated externally, in which the solid particles progress continuously by vibrofluidisation. The wall temperature of the tube is maintained uniform along the reactor by external heating (400-900°C), this heating being produced by exhaust gases from the gas engine. In this programme, simulation of these gases will be obtained using a gas burner.

The tube is fed with biomass with low air admission system. The resulting moving bed of solid is progressively dried and pyrolysed along the tube.

The vibro-fluidized transport of the solid within the tubular reactor is essentially in plug flow conditions for the particles. This permits a uniform thermal treatment of the solid. The residence time of the solid is only determined by the vibration parameters (frequency, amplitude) imposed to the system. The range imposed to the system can be also modified, by adapting the bed slope or the bed length. The residence time of solids particles in the reactor is independent of:

- the imposed solid flow rate (with influences the thickness of the moving bed within the tubular reactor)
- the particle granulometry and density.

The heat transfer coefficient is high (300 W/$m^2$ C°) due to the vibrofluidisation process permetting a high pyrorolytic conversion of solid.

Also, the vibro-fluidisation of solid permit a direct separation of the pyrolytic gas from the char at the output of the reactor.

An unit has been developed, which can treat about 10 kg/h of solid particles. The process has been tested successfully in different applications (drying, thermal treatment of solids). Preliminary successfull tests have also been conducted on pyrolysis of wastes.

The process is adapted to the conditions of the invention. An appropriate unit is would have a capacity of 60 kg/h of continuous biomass treatment. The unit will be able to produce about 20 kg/h of char and 40 kg/h of pyrolytic gases. Some adjustments may also be necessary concerning solid feeding in the reactor (low air admission).

This process permits a controlled composition of pyrolytic gases/char.

Preliminary studies with the available pyrolysis unit give the necessary information to build models and optimise the different characteristics of the system in order to design a 60 kg/h unit.

The unit is to be tested in order to characterise the pyrolysis performances. A study of different variables are to be carried out (residence time, temperature) in order to optimise and control the process.

The obtained char will feed the Char Reduction Chamber and gas of pyrolysis will feed the (TCC)[2] reactor.

The unit is schematically presented on **Figure 2**.

**Char Reduction Reactor (or Chamber) CRC :**

The functionality of the char reduction reactor is to ensure that as much thermal bound energy in the gas as possible is converted into chemical bound energy by means of the endothermic char reactions.

According to the feedstock utilized in the invention (straw and bark) as well as to the process, (staged divided gasifier), specific demands have to be considered in the choice of the char reduction reactor:

- it must be designed to handle biomass char with a great variation of size and carbon content,
- it must be able to accept hot incoming gas (1100-1200°C) without agglomering,
- it must be operated at low temperature as possible in order to minimize the heat losses in the gas,
- it must be able to operate with a high ash content.

A spouted bed has been utilised with success in a two stages straw gasifier (Houmoller an Hausen, 1996) as well as for gasification of fuel rich mixtures and coal (Weinberg, 1996). Among other, it has the following characteristics:

- high tolerance towards size of the char,
- it can operate with no or a very small amount of bed material,
- as the spouted bed reactor has no bottom grid, larger particles that agglomerates in the bottom of the bottom core will drop down and can be removed,
- according to the fact that only 30-60% of the char is converted in the Char Reduction Reactor, the operating temperature can be several hundred degrees higher than the ash softening temperature without operating problems.

These are the main reasons why a spouted bed reactor has been chosen and adapted to the invention.

The Char Reduction Reactor is operated in order to obtain the highest possible reactivity of the char in the reactor volume. Thus, the gasification reactor is fed with char from the pyrolysis unit and hot gas from the (TCC)[2].

As the (TCC)[2] is fed with both char and pyrolysis gas, there is always a large surplus of fuel present. This ensures that all oxidation processes takes place in the (TCC)[2] reactor and the risk for any exothermic reactions in the gasifier (that will lead to slagging) is reduced considerably.

**Connecting device between CRC and TCC2 :**

As mentioned above, this is a part of the present invention, too.

A best mode of implementation is shown on **Figure 4**.

At the outlet of the CRC, the gas and solid effluents are sorted out or separated in a cyclone; the ashes from gasification are collected and are directed to and fed into the TCC2. This feeding of the ashes into the TCC2 is a problematic operation indeed. Actually, it is necessary to provide a gas-tight link versus the gas from the TCC2 in order to avoid any by-pass of the ashes by the feeding device. It is to be noted that the cyclone is placed under a slight depression condition. Such a by-pass, if it occurred, and even if slight, would have the following consequences :

- loss of efficiency of the cyclone ( that is, many particles in the exhaust gas)

- pollution of the gases at the exhaust level, by the combustion gases of the TCC2 (that means, a drop in the calorific power of the gases and an increase in the tar content at the exhaust).

The present invention, in one of its aspects, sloves those problems.

According to the invention, a sytem or device using a piston PS is proposed. As shown on figure 4, the principle resides in creating, by compaction, a plug PLG made of ashes AS from gasification, which creates a perfect sealing between the gases from the TCC2 and the cyclone of the CRC.

That compacting is performed by a counter-pressure deviceCPD placed at the end of the feeding tube.

The length of the plug is a constant; each movement of the piston slightly displaces or moves the said plug and so makes some pulverulent material free. The feeding of the solids are therefore performed in a non continuous manner, and the speed of the piston is a fonction of the flowrate of the solids, so as to avoid any scale-up or accumulation at the bottom of the cyclone.

Another advantage of that system is, the ashes from the gasification are very friable and their compacting will allow to gring them very finely. The so ground ashes will have a very fast combustion kinetic, which allows the use of a classical burner using pulverulent fuel in the TCC2.

**Connecting device between the Pyrolyser and the CRC :**

As mentioned above, this is a part of the present invention, too.

A best mode of implementation is shown on **Figure 5**.

At the outlet of the pyrolyser, the solid (char C H ) and gaseous (PG) effluents must be sorted ou or separated in ordre to feed the char into the CRC and the gases into the TCC2. The use of a cyclone is not efficient here since, on the one hand, there is only a slight depression downstream, and, on the other hand, because of the low density of the char.

This represents a problem which is also solved by the invention, as described below.

A separator according to the best mode of the invention is shown on figure 5.

The principle consists in collecting the solid pulver (char) at the bottom part or section of a hopper and in extract it by a screw or any other kind of extracting device. The separator device SP is designed (namely, its dimensions) so that the ascending speed of the gases ( PG) be very slow, what therefore limits the exhaust of the fine particles.

In that case, the sealing is made downstream from the separator, in an « intermediate » hopper serving as a storage means. The said hopper can be the hopper used for feeding the CRC. The sealing can be performed that way, because the depression into the separator is quite low.

The separator comprises a vertical wall WL in order to « break » the flow and to ease the flow of the particles downwards. Additonally, the separator must be kept at a temperature above 100 °C in order to avoid the condensing, mainly of steam, but also of tars, especially during the starting up phases of the unit. An electrical heater can be used for that purpose, or a circulation of the preheating gases (EG) for the pyrolyser in a double wall enveloppe E , so as to optimize the energetic yield.

**Pyrolyser Feeding System :**

As mentioned above, this is a part of the present invention, too.

A best mode of implementation is shown on **Figures 6 and 7.**

The feeding of the solid material into the pyrolyser is sensitive due to problems linked to the condensation of tars in zones which are a priori cooler, what can cause an accumulation of products and a plugging after a certain period of time.

Additionally, the feeding system must perform a gas-thight sealing between the ambient air and the pyrolyser.

The invention solves these problems.

The feeding device according to the invention comprises a longitudinally conical screw LCS. The product is fed via that screw whose conical shape creates the formation of a biomass (BM) plug. That plug (PLG) plays an esential function, since it ensures a perfect gas-tight sealing between the pyrolyser and the screw and allows in particular to avoid the condensation of the tars in the feeding system, so that the risk of plugging is limited.

Then the biomas BM can be fed by mere gravity into the pyrolysis reactor.

As a preferred option, a « breaker » BK is positioned between the biomass formation zone (that is, the end of the conical screw LCS) and the feeding collector FC aimed at directing the biomass to the pyrolyser. This is an interesting option especially when the biomass is humid and / or is likely to form agglomerates during the compacting process.

When the pyrolysis reactor diameter is small ( < 200 mm ) the gravity feeding of the solid material must be made via a sectior of a diameter smaller that of the reactor : the risks of plugging (by clogging by the tars) are therefore severe. This is why, in a prefered but non limitative version as represented on figure 7, a second, vertical screw VS is used in order to directly feed the biomass into the pyrolysis reactor.

**Gas Cleaning :**

The gas cleaning equipment has 3 purposes.

1. To separate the char from the gas in order to recirculate as much as possible to the $(TCC)^2$
2. To reduce the level of tar and particles to the level required to operate the engine
3. To cool the gas to near ambient temperature.

The cleaning of gases can be realised in three stages:

- gas/solid separation in a hot cyclone at the outlet of the gasifier, the collected solid particle going back to $(TCC)^2$.
- gas washing by water scrubbing and filtration.
- liquid effluents concentration by evaporation, the system generated being reintroduced in the $(TCC)^2$.

A first gas/particles separation can be obtained by utilising hot cyclone separator at the outlet of the gasifier. The efficiency of the cyclone can vary between 40-90% depending on the size and the density of the particles contained in gas. The untrapped particle will be captured by second stage of the gas treatment process.

Though the major part of the tar produced by the pyrolysis unit has been cracked and that the mineral part of char has been slagged in the $(TCC)^2$ unit, the gas from the gasifier may still contains some impurities (solid particles, residual tar, alkali,...). Their separation should be carried out by gas treatment prior to feeding the engine. Therefore, the complementary stage concerns the gas cleaning by water quenching of the gas stream. This phase will allow gas cooling and separation of the residual impurities and soluble matters. Water effluents can be filtered in order to separate the remaining solid impurities. The cleaned gas will feed the engine.

The water effluents can be concentrated by evaporation. The heat recovery can be obtained by the cooling of the output gas from gasifier as an energy source for water evaporation. Alkali salt can be extracted in this phase. The vapor steam generated from this phase can be reintroduced into the $TCC^2$ unit in order to increase the overall thermal efficiency of the process.

**EXAMPLE(S)**

In order to gain an overview of the clean gas production for power applications, a brief description of the total gasification process is given with reference to the simplified diagram of the figure 1.

This **figure 1** shows the principle of a stage divided gasifier fitted with a Total Char Combustion and Tar Cracking Chamber $(TCC)^2$.

The biomass is fed to a vibro-fluidized pyrolysis unit (Task 2) where the biomass is pyrolysed and thereby divided into char and pyrolysis gas. The char is fed to a Char Reduction Reactor (CRC) (Task 3), and the pyrolysis gas is fed to the $(TCC)^2$ (Task 1).

The $(TCC)^2$ is fed with partly reduced char from the char reduction reactor. The partly reduced char that is recirculated from the char reduction reactor is oxidised in the upper part of the $(TCC)^2$, and the heat capacity of hot gases produced in the oxydation zone are used for thermal decomposition of the tar in the pyrolysis gas. The $(TCC)^2$ is also fed with water from the gas-washer/cooler. This allows the hasardous waste products from the gas cleaning (Task 4) to be eliminated. By operating in a temperature range where biomass ash forms a liquid slag, biomass with a wide range of ash content can be used without the usual slagging problems. The ash in the biomass is discharged from the $(TCC)^2$ as liquid slag.

The gaseous products, CO2 and H2O, from the reactions in the $(TCC)^2$ are fed to the char reduction reactor where heat, down to the temperature level where no char reduction will take place ($700°C$), is utilised to reduce the char.

The hot gas from the CRC is fed to a hot cyclone followed by a gas-washer-cooler where the gas is cleaned of particles, alkali vapours and remaining tar. The separated ashes from the hot cyclone are fed to the $(TCC)^2$ through a feeder.

The dirty water from the gas-washer/cooler is fed back to the (TCC)[2] and consumed as a gasification agent in the process. The cold gas from the cooler is then fed to a motor generator which produces electricity and heat.

The different work categories needed for obtaining clean gases from biomass feedstock, with high ash content like straw or bark are given here after.

- Vibro-fluidized pyrolysis for biomass standardisation and purification prior to gasification
- (TCC)[2] for tar elimination and total carbon conversion
- Solid/Gas separation after gasification

**EXAMPLE:**

Using a unit as shown on Figure 1 and starting from a biomass whose composition could vary:

- Ash content: until 50 %

- Water content: until 50 %

the following data are presented :

(1) - Total conversion of solid $\rightarrow$ < 0,1 % of carbon in ash.

(2) - High energy efficiency of raw biomass : up to 80 % (in the best configuration of operating conditions).

(3) - High heat value : until 5000 kJ/kg of drygas (with air) and 7000 kJ/kg of drygas (with enriched air: 40 %weight of 02).

(4) -Low nitrogen content in gases : 43 % (with air) and 26 % (with enriched air: 40 %weight of 02)

(5) -Low air factor:

$$0,26 \; (= \; \frac{-O_2}{C}\sqrt{} \; / \; \frac{O_2}{C}\sqrt{}_{tochio} \; )$$

To ensure correct functioning of the whole unit, we need :

- A temperature in the TCC[2] higher than 1200 °C (to allow slagging)
- A temperature at the CRC outlet higher than 700 °C (to allow gazification reaction in fluidized bed reactor) and lower than 1000 °C (to avoid partial ash slagging)

These two conditions are necessary and are at the basis of the dimensioning.

Then, all others parameters could vary according to biomass used and process optimisation :

- Pyrolysis temperature : 500 - 1000 °C

- Carbon conversion rate in the CRC : 20-100 %

With the above data, the skilled man will be able to appropriately desing units according to the invention, adapted to various biomasses and / or quantities of same.

**Claims**

1. Process for the gasification of biomass, of the type comprising a step of pyrolysing the said biomass, and a step of char reduction, **characterized in that** the char reduction or conversion takes place in two distinct steps and produces a clean gas (i.e. with a very low tar content) of high energy value, with the biomass carbon being totally converted (this ensuring an optimal energetic yield), with the ashes being vitrified.

2. Process according to claim 1 **characterized in that** the char reduction or conversion comprises, or takes place in, two steps comprising a gasification step and a total char combustion step.

3. Process according to any of claims 1 or 2 **characterised in that** the total char combustion step incorporates a tar cracking step and is performed between (when following the gas line) the pyrolysis step and the char gasification step.

4. Process according to any of claims 1 to 3 **characterised in that** the total char combustion step and the tar cracking steps are performed into the form of a single, combined, total char combustion and tar cracking step called TCC2.

5. Process according to any of claims 1 to 4 **characterised in that** the char conversion takes place in two steps :

- the first step is performed in a char reduction reactor (CRC) whose main purpose is to convert as much as possible carbon of the char (supplied directly from the biomass pyrolysis unit) into gas by means of reduction reactions;

- the second step takes place in a combined, total char combustion and tar cracking (TCC2) reactor whose purpose, with respect to the char, is to perform a complete conversion of the remaining carbon from the CRC drain off and to thermally crack the pyrolysis gases, and residual ashes are vitrified and eliminated as slag.

6. Process according to any of claims 1 to 5 **characterised in that** the biomass pyrolysis step is performed under vibrating conditions.

7. Process according to claim 6 **characterised in that** the fluidized bed gazifier is combined with two reactors, i.e. a biomass pyrolyser and a high temperature, combined, total char combustion and tar cracking (TCC2) reactor (called TCC2), and **in that** the char « to gasify » is produced by the pyrolyser, while the energy required for the gasification is generated by the TCC2 due to the combustion of the ashes (resulting from the gasification step) and of a fraction of the pyrolysis gases.

8. Process according to any of claims 1 to 7 **characterised in that** the high temperature combustion reactor or chamber for performing the TCC2 step is made of, or comprises, two zones :

   - a first zone Z1 for the combustion and melting of the ashes resulting from the gasification step

   - a second zone Z2 for the cracking and / or combustion of the pyrolysis gases.

9. Process according to claim 8 **characterised in that** in Z1, the combustion of the gasification ashes is performed under stoechiometric conditions, so as to convert the total amount of carbon (coming from the gasifier) into a gas , and the said zone Z1 is maintained at an elevated temperature (> 1200 °C or so) due to the heat of the flame and its radiating towards the reactor or chamber walls, which temperature is high enough to allow the melting of the ashes, the treated ashes flowing under a liquid state out of the reactor or chamber.

10. Process according to any of claims 8 or 9 **characterised in that** in Z2, the chemical atmosphere is a reducing atmosphere, and the thermal cracking of the pyrolysis heavy gases is performed and in particular that of the tars.

11. Process according to any of claims 8 to 10 **characterised in that** in the event, the energy provided by the combustion of the carbon in Z1 is insufficient, then the amount of air can be increased so as to allow a partial oxidation of the pyrolysis gases.

12. Process according to any of claims 1 to 11 **characterised in that** a by-pass of a part of char directly from pyrolysis unit to TCC$^2$ is performed.

13. Process according to any of claims 1 to 11 **charac-**

**terised in that** a recirculation of a part of ashes (char) from the CRC is performed.

14. Process according to any of claims 1 to 11 **characterised in that** a by-pass of a part of TCC$^2$ gases in the pyrolyser is performed, then energy from this hot gases can be used for pyrolysis reaction.

15. Process according to any of claims 1 to 14 **characterised in** the char gazification step is started in the pyrolyser.

16. Process according to any of claims 1 to 15 **characterised in that** the Total Char Combustion and Tar Cracking Chamber (TCC)$^2$ is to recycle the remaining part (15 to 20%) of the carbon included in the ashes coming from the Char Reduction Reactor (or Chamber) CRC as well as the tar flowing with pyrolysis gases in order to obtain a complete conversion of the original carbon content in the biomass.

17. Process according to any of claims 1 to 15 **characterised in that** he TCC$^2$ will be operated at temperature in the range 1200 - 1500 °C, so that the combustion of the carbon with the pyrolysis gases will lead to a liquid fraction containing essentially mineral matters eliminated as slag after vitrification.

18. Process according to any of claims 1 to 17 **characterised in that** (TCC)$^2$ allows:

   - a carbon conversion estimated at about 98% of the initial carbon content of the biomass.

   - a decrease in the tar content of the exhaust gases at a level in the range 10-50 mg/Nm$^3$.

19. Process according to any of claims 1 to 18 **characterised in that** it comprises Char Reduction Reactor (or Chamber) (CRC) to ensure that as much thermal bound energy in the gas as possible is converted into chemical bound energy by means of the endothermic char reactions, the Char Reduction Reactor being operated in order to obtain the highest possible reactivity of the char in the reactor volume ( the gasification reactor is fed with char from the biomass pyrolysis unit and with hot gas from the (TCC)$^2$.

20. Unit for the gasification of biomass, of the type comprising a reactor for pyrolysing the said biomass, and a reactor for char reduction, **characterized in that** the char reduction or conversion takes place in two distinct reactors and the unit produces a clean gas (i.e. with a very low tar content) of high energy value, with the biomass carbon being totally converted (this ensuring an optimal energetic yield).

21. Unit according to claim 20 **characterized in that** the char reduction or conversion reactor comprises, or takes place in, two zones comprising a gasification step and a total char combustion step.

22. Unit according to any of claims 20 or 21 **characterised in that** the total char combustion step and tar cracking step are performed between (when following the gas line) the pyrolysis step and the char reduction step.

23. Unit according to any of claims 20 to 22 **characterised in that** the total char combustion step and the tar cracking steps are performed in a single, combined, total char combustion and tar cracking reactor called TCC2.

24. Unit according to any of claims 20 to 23 **characterised in that** the char conversion takes place in two reactors:

    - the first step is performed in a char reduction reactor or chamber (CRC) whose main purpose is to convert as much as possible carbon of the char (supplied directly from the biomass pyrolysis unit) into pyrolysis gas b y means of reduction reactions;

    - the second step takes place in a combined, total char combustion and tar cracking (TCC2) reactor whose purpose, with respect to the char, is to perform a complete conversion of the remaining carbon from the CRC drain off and to thermally crack the pyrolysis and residual ashes are vitrified and eliminated as slag.

25. Unit according to any of claims 20 to 24 **characterised in that**

    - it incorporates a washer, water is recovered and injected in the TCC$^2$ where this water (steam) will allow to improve gazification of char in the CRC and the fine particles not collected by the incorporated cyclone will be then re-injected in the TCC$^2$ with water from washer, or

    - it incorporates a heat exchanger and a bag filter in place of the washer.

26. Unit according to any of claims 20 to 25 **characterised in that** the ashes from gasification (from the CRC) can also be fed to the TCC2 via a burner, or not, either in the axis of the TCC2 reactor, or tangentially.

27. Unit according to any of claims 20 to 26 **characterised in that**

    - the biomass is fed to a vibro-fluidized pyrolysis unit PYR where the biomass is pyrolysed and thereby divided into char C H and pyrolysis gas PG,

    - the char is fed to a Char Reduction Reactor (or Chamber) (CRC), and the pyrolysis gas is fed to the (TCC)$^2$,

    in such a way that:

    - the (TCC)$^2$ is fed with partly reduced char recirculated from the char reduction reactor CRC, and is oxidised in the upper part of the (TCC)$^2$, while the heat capacity of hot gases produced in the oxydation zone is used for thermal decomposition of the tar contained in the pyrolysis gas;

    - the hot gas from the CRC is fed to a hot cyclone followed by a gas-washer-cooler where the gas is cleaned of particles, alkali vapours and remaining tar, and the separated ashes from the hot cyclone are fed to the (TCC)$^2$ through a feeder.

    - the dirty water from the gas-washer/cooler is fed back to the (TCC)$^2$ and consumed as a gasification agent in the process, while the cold gas from the cooler is then fed to a generator which produces electricity and heat;

    - the (TCC)$^2$ is also fed with water from the gas-washer/cooler and is operating in a temperature range where biomass ash forms a liquid slag which is discharged from the TCC2;

    - the gaseous products, CO2 and H2O, from the reactions in the (TCC)$^2$ are recirculated and fed to the char reduction reactor CRC where heat, down to the temperature level where no char reduction will take place (700°C), is utilised to reduce the char.

28. Single, combined, total char combustion and tar cracking reactor (TCC2) for incorporation in an unit according to any of claims 20 to 27 **characterised in that** it comprises two zones Z1 (combustion zone) and Z2 (cracking zone), and the combustion zone Z1 is separated apart from the the cracking zone Z2, the zone Z1 being the zone devoted to the combustion, where ashes from combustion are burnt as well as a part of the gases from biomass pyrolysis (« pyrolysis gases »), this zone featuring a high temperature so as to allow the melting of the ashes, while the remaining part of the biomass pyrolysis gases is injected or fed into zone Z2 (where ther is no oxygen left) so as to allow their thermal cracking.

29. TCC2 according to claim 28 **characterised in that** a staging of the combustion air and of the pyrolysis gases in the combustion zone Z1 is performed.

30. TCC2 according to any of claims 28 and 29 **characterised in that** the zone Z2 is inclined upwards so as to allow a better recovery of the slags and to avoid the exhaust of ashes .

31. TCC2 according to any of claims 28 and 29 **characterised in that** the two zones Z1 and Z2 are not made distinct so that the heat is more confined (less heat losses), and the cracking zone Z2 is maintained at a very high temperature thanks to the close relationship with the combustion zone Z1.

32. TCC2 according to any of claims 28 and 29 **characterised in that** the combustion is performed in a cyclone containing the zone Z1 ; the hot gases therefore flow upwards along the axis of the device and bring the necessary energy to the cracking zone Z2 for the pyrolysis gases.

33. TCC2 according to any of claims 28 to 32 **characterised in that** it is operated at temperature in the range 1200 - 1500 °C.

34. Biomass pyrolysis unit **characterised in that** it is based on a tubular sub - stoechiometric reactor, heated externally, in which the solid particles progress continuously by vibrofluidisation.

35. Pyrolysis unit according to claim 34 **characterised in that** the wall temperature of the tube is maintained uniform along the reactor by external heating (400-900°C), this heating being produced by exhaust gases from the gas engine.

36. Pyrolysis unit according to any of claims 34 or 35 **characterised in that** the tube is fed with biomass with low air admission system and the resulting moving bed of solid is progressively dried and pyrolysed along the tube.

37. Pyrolysis unit according to any of claims 34 to 36 **characterised in that** the vibro-fluidized transport of the solid within the tubular reactor is essentially in plug flow conditions for the particles, what permits a uniform thermal treatment of the solid, and the residence time of the solid is only determined by the vibration parameters (frequency , amplitude ) imposed to the system, with the range imposed to the system is also adapted, by adapting the bed slope or the bed length.

38. Connecting device for connecting CRC and TCC2, for incorporation in an unit according to any of claims 20 to 27 **characterised in that** it comprises a cyclone at the outlet of the CRC, the gas and solid effluents being sorted out or separated in the said cyclone with the ashes from gasification being collected and directed to and fed into the TCC2, and **in that** the said connecting device comprises between the cyclone and the TCC2 a piston PS in order to create, by compaction, a plug PLG made of ashes AS from gasification, which creates a perfect sealing between the gases from the TCC2 and the cyclone of the CRC.

39. Connecting device according to claim 38 **characterised in that** the said compacting is performed by a counter-pressure device CPD placed at the end of the feeding tube.

40. Connecting device according to any of claims 38 and 39 **characterised in that** it is adapted so that the length of the plug is a constant; each movement of the piston slightly displaces or moves the said plug and so makes some pulverulent material free, the feeding of the solids is therefore performed in a non continuous manner, and the speed of the piston is a fonction of the flowrate of the solids, so as to avoid any scale-up or accumulation at the bottom of the cyclone.

41. Connecting device between the Pyrolyser and the CRC for incorporation in an unit according to any of claims 20 to 27 **characterised in that** at the outlet of the pyrolyser, the solid (char C H ) and gaseous (PG) effluents are sorted ou or separated in order to feed the char into the CRC and the gases into the TCC2 by means for collecting the solid pulver (char) at the bottom part or section of a hopper and for extracting it by a screw or any other kind of extracting device, the said separator device SP being adapted (namely, with regards to its dimensions) so that the ascending speed of the gases ( PG ) be very slow, what therefore limits the exhaust of the fine particles.

42. Connecting device according to claim 43 **characterised in that** the sealing is made downstream from the said separator, in an « intermediate » hopper serving as a storage means, which can be the hopper used for feeding the CRC.

43. Connecting device according to any of claims 41 and 42 **characterised in that** the separator comprises a vertical wall WL in order to « break » the flow and to ease the flow of the particles downwards, and the separator is kept at a temperature above 300 °C in order to avoid the condensing, mainly of steam, but also of tars, especially during the starting up phases of the unit, by way of an electrical heater or a circulation of the preheating gases (EG) for the pyrolyser in a double wall enveloppe E.

44. Pyrolyser Feeding System for incorporation in an unit according to any of claims 20 to 27, **characterised in that** it comprises a longitudinally conical screw LCS, the product is fed via that screw whose conical shape creates the formation of a biomass (BM) plug, that plug (PLG) ensures a perfect gastight sealing between the pyrolyser and the screw and allows in particular to avoid the condensation of the tars in the feeding system, so that the risk of plugging is limited.

45. System according to claim 44 **characterised in that** the biomas BM can be then fed by mere gravity into the pyrolysis reactor.

46. System according to any of claims 44 and 45 **characterised in that** a « breaker » BK is positioned between the biomass formation zone (that is, the end of the conical screw LCS) and the feeding collector FC aimed at directing the biomass to the pyrolyser.

47. System according to any of claims 44 to 46 **characterised in that**, when the pyrolysis reactor diameter is small ( < 200 mm ), the gravity feeding of the solid material is made via a section of a diameter smaller than that of the reactor and a second, vertical screw VS is used in order to directly feed the biomass into the pyrolysis reactor.

48. Process according to any of claims 1 to 19 **characterised in that** it uses a unit as claimed in claim **27** and starts from a biomass whose composition is :

- Ash content: until 50 %

- Water content: until 50 %

the following results are obtained :

(1) - Total conversion of solid $\rightarrow$ < 0,1 % of carbon in ash.

(2) - High energy efficiency of raw biomass : up to 80 % (in the best configuration of operating conditions).

(3) - High heat value : until 5000 kJ/kg of drygas (with air) and 7000 kJ/kg of drygas (with enriched air: 40 %weight of 02).

(4) -Low nitrogen content in gases : 43 % (with air) and 26 % (with enriched air : 40 %weight of O2)

(5) -Low air factor::

$$0{,}26\ (=\ \frac{-O_2}{C}\Bigg/\ \frac{O_2}{C}_{tochio}\ )$$

with the following operating parameters:

- A temperature in the TCC[2] higher than 1300 °C (to allow slagging)

- A temperature at the CRC outlet higher than 700 °C (to allow gazification reaction in fluidized bed reactor) and lower than 1000 °C (to avoid partial ash slagging)

the others parameters varying according to biomass used and process optimisation :

- Pyrolysis temperature : 500 - 1000 °C

- Carbon conversion rate in the CRC : 20-100 %

49. Industrial products, intermediate produstc or by-products obtained b y the performing the process according to any of claims 1 to 19 or using the units, or TCC2 reactor, or vibrating pyrolysis unit, according to any of claims 20 to 38,

50. Applications of the processes, units, TCC2, connecting devices and feedind devices, and industrial products, intermediate products, and by - products, according to any of claims 1 to 49, in domains such as :

- production of electricity, of heat, of any energy arising from the conversion or use of the said heat,

- cogeneration from by-products, residues, wastes, etc... of agriculture or industrial or municipal origin, more generally from any carbonaceous product, waste, resideu, etc....

- valorisation of novel and renewable energies, inter alia in order to reduce the production of greenhouse gas according to the Kyoto Protocole,

by treatment of a so-called « biomass » in order to recover energy, heat, electrical energy, from agriculture or industrial wastes, the biomass being made of organic waste and residues of various human, agriculture or industrial activities, such as wood and straw masses, emerging biomasess made of agriculture residues (mainly from the production of cereals) and municipal or industrial, organic, wastes or residues, or culture specifically designed and adapted to the production of the so calles « bio-energy ».

- in large scale applications, or in small scale application (below 5 MW).

Figure 1 A

Figure 1 B

Figure 2

AS (from CRC) (1)
+
PG (from PYR) (2)
+
Air (3)

$(1) + (2) + (3) \longrightarrow$

$(2) + (3) \longrightarrow$

Z1

CG

$(2) + (3)$

Z2

HG ( to CRC)

SL

**Figure 3 A**

AS ( from CRC)
+
Air

Air
( + AS from CRC )

$Z_1$

PG

PG
+
Air

$Z_2$

HG ( to CRC )

SL

**Figure 3 B**

Figure 3 C

PG

Z<sub>2</sub>

GC
( to CRC )

AS
+
Air
( + PG )

Z<sub>1</sub>

SL

**Figure 3 D**

CPD      AS      PST

AS

PLG

**Figure 4**

**Figure 5**

**Figure 6**

Figure 7